# DEMANDE DE BREVET EUROPEEN

(11) **EP 1 930 111 A1**
(43) Date de publication de la demande: **11.06.2008**
(21) Numéro de dépôt: 06125304.3
(22) Date de dépôt: 04.12.2006
(51) Int. Cl.: B23G 1/34, B23G 5/18, B23G 3/00, B23G 9/00, B23Q 5/04

(54) **Tête de tourbillonnage et son utilisation**

(71) Demandeur: Willemin-Macodel S.A., 2854 Bassecourt (CH)
(72) Inventeur: Vouillamoz, Gael, 2800 Delémont (CH)
(74) Mandataire: Ganguillet, Cyril

(57) **Abrégé**

Le bâti de la tête de tourbillonnage comporte l'enveloppe rigide 7, dont la partie 10 contient la poulie d'entraînement 15 solidaire de l'organe d'accouplement 17 relié à l'arbre moteur de la broche 26. Cette poulie 15 entraîne, par l'intermédiaire de la courroie 19, la poulie 8 solidaire du cône de liaison 4, portant lui-même la fraise 1 à denture intérieure qui taille le filet de la tige de vis 27 supportée entre l'unité d'avance de barre 28 et la contre-pointe 29. Cette dernière est montée comme outil échangeable sur l'unité de reprise 32.

## Description

La présente invention concerne une tête de tourbillonnage comportant une fraise à denture intérieure, montée dans un bâti agencé pour être fixé au corps d'une broche dans un centre d'usinage automatique, de manière que l'arbre moteur de la broche entraîne la dite fraise pendant une opération de tourbillonnage intégrée à un cycle de travail du dit centre. Elle concerne également l'utilisation d'une telle tête de tourbillonnage sur la broche d'un centre d'usinage à cinq axes.

Le but de la présente invention est de rationaliser et améliorer, sur le plan de l'efficacité, la fabrication par usinage de certains objets du domaine médical, plus précisément de certaines catégories de vis à os. Les vis à os sont des objets d'utilisation courante en chirurgie. Les structures des différents types de telles vis sont aujourd'hui normalisées et leur fabrication est soumise à des contraintes précises. On sait, en particulier, que les exigences de qualité requises pour le filetage des tiges des vis conduisent à utiliser la technique du tourbillonnage, soit le taillage des filets au moyen de fraises à denture intérieure disposées excentriquement et avec leur axe en oblique par rapport à l'axe de la tige. D'autre part, les structures des têtes des vis sont également normalisées et exigent des opérations de fraisage complexes selon une géométrie compliquée devant garantir un accouplement sécurisé avec l'embout de vissage au moment de la mise en place.

Pour répondre à ces exigences, on effectue généralement à l'heure actuelle les opérations de tourbillonnage sur des décolleteuses à poupée mobile, mais les opérations de fraisage des têtes de vis doivent alors être faites en reprise, sur une fraiseuse usuelle. On a déjà songé à réaliser des filets de vis par tourbillonnage sur les machines complexes déjà connues que sont les centres d'usinage à cinq axes à commande CNC; toutefois, les emplacements relatifs de la broche et de l'unité de reprise arrière qui sont imposés dans ces machines ne permettaient pas d'effectuer l'opération de tourbillonnage lorsque la longueur de filetage imposée exigeait un travail en contre-pointe de l'unité de reprise arrière.

La présente invention propose une solution à cette difficulté. Elle permet la fabrication à la barre, de vis à os normalisées de grande longueur sur un centre d'usinage conventionnel à cinq axes, en un seul cycle d'opérations programmées, se succédant automatiquement. Les temps de production atteignent dès lors des valeurs minimales.

Pour atteindre cet objectif, l'invention propose une tête de tourbillonnage selon la revendication 1 et une utilisation de cette tête de tourbillonnage selon la revendication 6. Des formes d'exécution avantageuses sont définies par les revendications 2 à 5 et 7.

Une forme de mise en oeuvre de l'invention est décrite ci-après à titre d'exemple en se référant au dessin annexé, dont :
- La fig. 1 est une vue en coupe de la tête de tourbillonnage;
- La fig. 2 est une vue en élévation perspective de la fraise à denture intérieure incorporée à la tête de la fig. 1;
- La fig. 3 est une vue en perspective de la tête de tourbillonnage fixée à la broche d'un centre d'usinage à cinq axes;
- La fig. 4 est une vue en élévation partiellement coupée montrant trois unités essentielles de la machine cinq axes pendant l'opération de tourbillonnage; et
- La fig. 5 est une vue partielle en perspective de la machine cinq axes dans son équipement conventionnel.

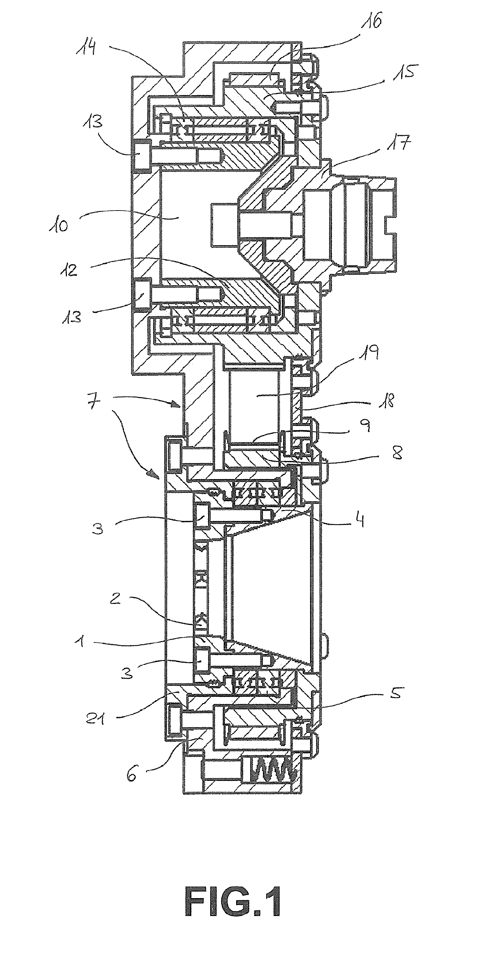

La vue en coupe de la fig. 1 montre les éléments principaux de la tête de tourbillonnage donnée en exemple. Une fraise à denture intérieure 1 pourvue de plaquettes 2 est fixée et centrée par des vis 3 contre la face arrière d'un support tubulaire à cône intérieur 4 qui tourne dans des paliers à roulement 5, par exemple en céramique. Les chemins de roulement extérieurs fixes des paliers 5 sont logés dans une partie en forme de douille 6 d'une enveloppe métallique 7 formant la partie principale du bâti de la tête de tourbillonnage. L'extrémité du cône 4 porte une poulie creuse 8 munie de dents 9 et comportant une partie tubulaire qui recouvre la partie en forme de douille 6 de l'enveloppe 7. Celle-ci est une pièce allongée avec une partie centrale en forme de couloir ayant un fond et une paroi latérale continue, et dont fait saillie à une extrémité l'élément tubulaire 6 entouré sur 180 degrés par la paroi du couloir. A l'autre extrémité, la pièce 7 forme un réceptacle circulaire 10 limité par la paroi latérale extérieure de la pièce. Dans le fond de ce réceptacle est fixée une pièce cylindrique 12 jouant le rôle de moyeu, retenue par des vis 13, et dont la surface extérieure porte des paliers à roulement 14 soutenant et guidant une seconde poulie creuse 15 munie extérieurement de dents 16. Cette poulie creuse 15 est solidaire, sur son côté extérieur, d'un fond 17 constituant un organe d'accouplement. L'enveloppe 7 est fermée du côté du cône 4 et de l'organe d'accouplement 17 par un couvercle plat 18 muni d'ouvertures pour le passage des parties saillantes des corps rotatifs 8, 4, 1 d'une part et 17, 15 d'autre part. Ces organes rotatifs sont supportés avec leurs axes parallèles dans l'enveloppe 7. L'enlèvement du couvercle 18 permet la mise en place d'une courroie crantée 19 sur les poulies ce qui assure l'entraînement de la fraise 1 depuis l'organe 17.

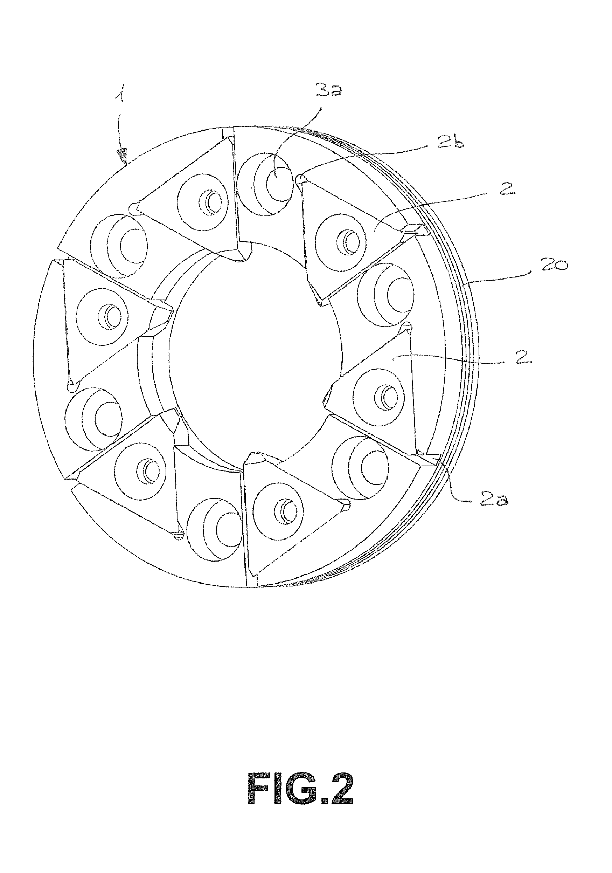

La fig. 2 montre la fraise à denture intérieure 1 avec six plaquettes triangulaires 2 engagées dans des logements de la face arrière de la fraise. On voit que, pour chaque plaquette, un de ses sommets est proéminent dans l'alésage central afin de tailler la barre à fileter comme on le verra plus loin. Un autre sommet s'étend en saillie dans un dégagement radial 2a de la fraise, et le troisième sommet est engagé dans une creusure allongée 2b pratiquée dans la face arrière de la fraise. La face arrière de la fraise comporte six logements cylindriques 3a dans lesquels viennent se loger les têtes des vis 3. La face latérale de celle-ci comporte une série de rainures 20 en forme de labyrinthe, coopérant avec une bague 21 (fig. 1) fixée à l'enveloppe 7 et entourant la fraise.

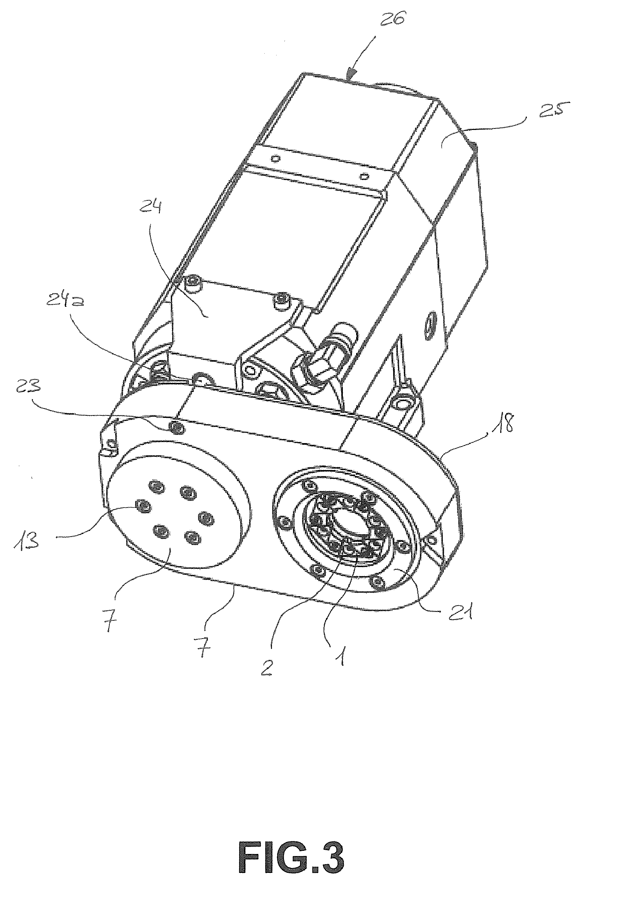

La tête de tourbillonnage est représentée à la fig. 3, fixée au corps 25 d'une broche 26. On remarque la disposition très compacte du bâti obtenue avec la construction décrite. Une ouverture calibrée 23 constitue un moyen d'indexage coopérant de manière très précise avec un moyen d'indexage correspondant 24, 24a fixé au corps 25 de la broche 26. Comme on le verra plus loin, lors de sa mise en place sur le corps 25, l'organe d'accouplement 17, avec sa saillie tubulaire à face externe légèrement conique (selon le standard HSK E40) et son alésage présentant une gorge intérieure s'engage et se lie à l'arbre moteur de la broche de telle sorte que les moyens d'indexage complémentaires 23, 24, 24a complètent parfaitement le montage isostatique de l'organe 17 sur la broche tout en assurant son entraînement.

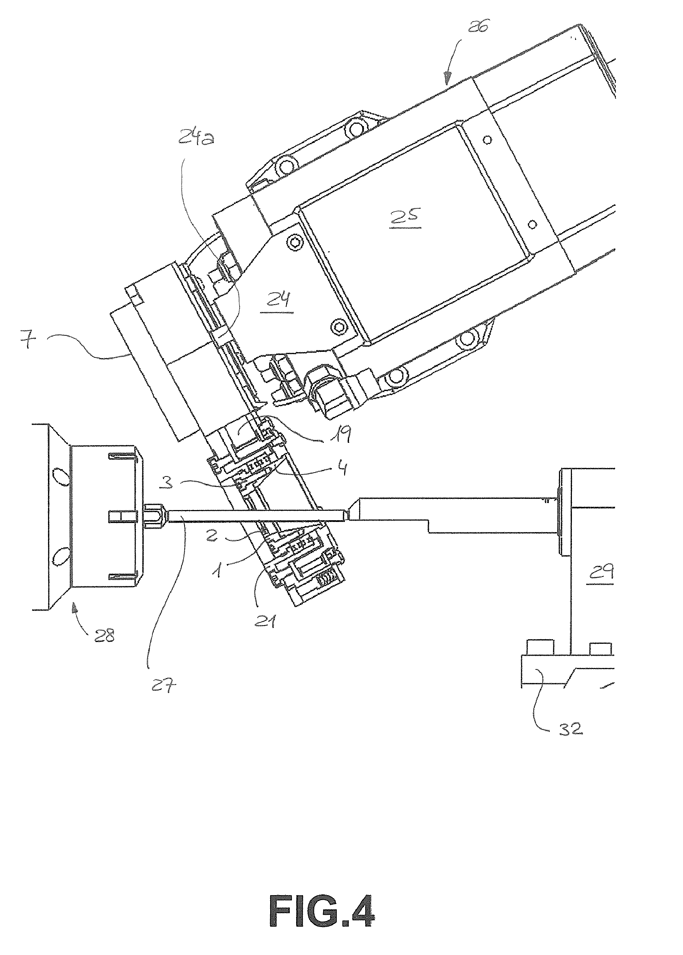

La fig. 4 montre comment s'effectue, avec la tête décrite fixée à la broche 26, une opération de tourbillonnage sur une tige 27 venue d'une barre de matière à usiner, entraînée en rotation et guidée par une poupée 28. Celle-ci appartient à un axe d'avance de barre d'une machine à cinq axes. La tige 27 est supportée à son extrémité antérieure par une contre-pointe 29.

L'axe de rotation de la broche 26 est incliné sur celui de la barre 27 d'un angle qui correspond à l'angle de montée du filet que doit tailler la fraise à denture intérieure 1. D'autre part, cet axe est déporté latéralement de façon à fixer la position excentrée de la fraise 1 par rapport à la barre 27. Le diamètre du filet est déterminé par cette excentration de la couronne de tourbillonnage, donc par la distance entre les centres de la barre et de la fraise. La fraise tourne à haute vitesse autour de la barre à fileter. Celle-ci est animée elle-même d'une rotation lente synchronisée avec l'avance axiale de l'outil ce qui permet de définir le pas du filet. La partie de la tête de tourbillonnage représentée en coupe à la fig. 4 montre comment la construction ramassée décrite permet l'entraînement de la fraise 1 par la courroie crantée 19 avec un encombrement minimum assurant la rigidité et la précision des positionnements, ce qui assure une fabrication de haute qualité des vis à os.

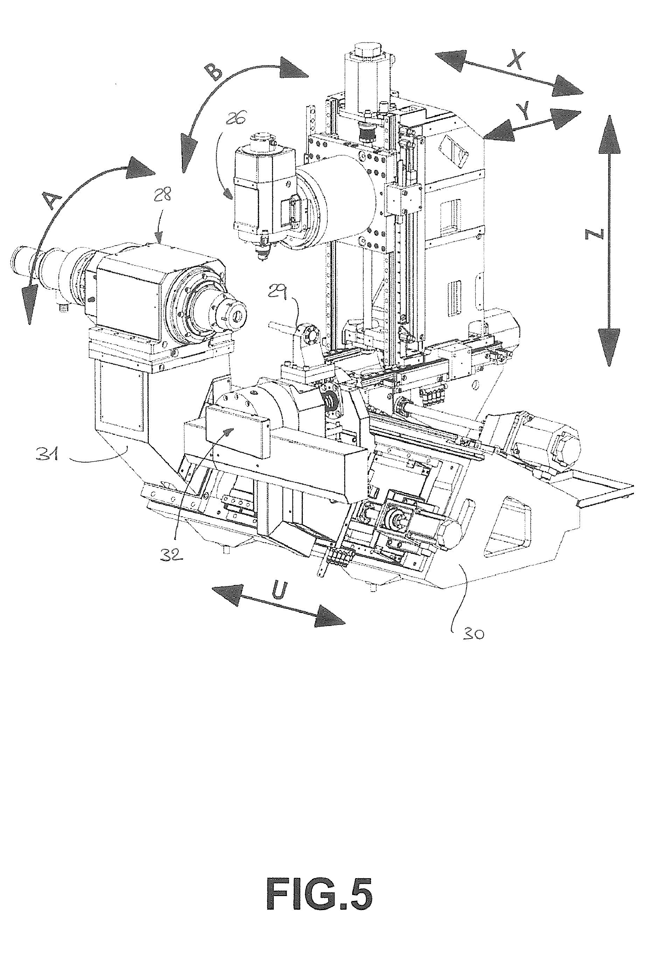

Cette performance est atteinte facilement en utilisant un centre d'usinage conventionnel tel que représenté à la fig. 5. Dans cette machine, le socle rigide 30 porte, sur une console 31 qui lui est rigidement liée, l'axe d'avance de barre 28 déjà représenté à la fig. 4. Cet axe définit la direction X. La console 31 définit un plan horizontal parallèle à l'axe X. Elle guide un élément 32 appelé unité de reprise arrière capable de coulisser dans la direction X sur une course réduite (axe U). Cette unité 32 peut aussi pivoter autour d'un axe horizontal perpendiculaire à X (axe Y). Elle peut être pourvue d'une pince de serrage ou d'un étau de reprise, mais peut également être pourvue d'un système de contre-pointe tel que représenté en 29 à la fig. 4. La tige de contre-pointe présente un dégagement afin d'éviter une interaction avec la tête de tourbillonnage compte tenu de l'angle d'inclinaison des filets.

A la fig. 5, on voit la broche 26 munie d'une simple fraise. C'est une unité mobile selon quatre axes X, Y, Z, et B qu'il n'est pas nécessaire de décrire en détail puisque appartenant à une machine connue. Lors de l'utilisation de la tête de tourbillonnage décrite pour la réalisation d'une vis à os de grande longueur, la broche 26 et l'unité de reprise 32 sont d'abord amenées dans les positions de la fig. 4. La barre à usiner (non représenté à la fig. 5) est avancée et son extrémité assurée par engagement dans la contre-pointe 29. Le filetage de la vis est réalisé par déplacement de la broche 26 selon l'axe X. Ensuite, la broche 26 est dégagée. La tête de tourbillonnage séparée de la broche est réintroduite dans un magasin (non représenté) au moyen d'un bras de changement d'outil; après quoi, la broche étant équipée d'un outil de tronçonnage, le segment de barre 27 dûment fileté est sectionné au niveau de l'unité 28. On comprend que le fraisage de la tête de la vis peut être effectué par un outil adéquat monté sur l'arbre moteur de la broche 26 au cours du même cycle d'opérations que celui incluant le tourbillonnage. Cette opération peut avoir lieu soit avant soit après celle du filetage.

Le procédé complet peut être maîtrisé de manière flexible et totalement automatique par la programmation des axes existants.

Selon le mode d'exécution représenté sur les figures, la géométrie de la tête de tourbillonnage permet d'usiner un angle d'hélice de la vis jusqu'à 28°.

## Revendications

1. Tête de tourbillonnage comportant une fraise à denture intérieure (1), montée dans un bâti (7, 18) agencé pour être fixé au corps (25) d'une broche (26) dans un centre d'usinage automatique, de manière que l'arbre moteur de la broche entraîne la dite fraise pendant une opération de tourbillonnage intégrée à un cycle de travail du dit centre, **caractérisée en ce que** le bâti (7, 18) comporte une enveloppe allongée (7) contenant à ses deux extrémités des moyens de pivotement (5, 14), **en ce que** ceux-ci soutiennent et guident, à une extrémité la dite fraise (1) et à l'autre un organe d'entraînement (15) équipé d'un moyen d'accouplement (17) à l'arbre de la broche (26), et **en ce que** le bâti comporte en outre une liaison intérieure (19) pour l'entraînement en rotation de la fraise (1) depuis l'organe d'entraînement (15), et extérieurement un moyen d'indexage (23) capable de coopérer avec un moyen correspondant (24) du corps (25) de la broche (26) pour fixer le bâti dans une position prédéterminée par rapport au corps(25) de la broche lors de la mise en place de la tête de tourbillonnage au début de la dite opération de tourbillonnage.

2. Tête de tourbillonnage selon la revendication 1, **caractérisée en ce que** les axes de l'organe d'entraînement(15) et de la fraise à denture intérieure (1) sont parallèles.

3. Tête de tourbillonnage selon la revendication 2, **caractérisée en ce que** l'organe d'entraînement (15) est conformé en poulie dentée, et **en ce que** ladite liaison comporte une seconde poulie dentée (8) accouplée à la fraise (1) et une courroie crantée (19) tendue entre lesdites poulies dentées (15, 8).

4. Tête de tourbillonnage selon l'une quelconque des revendications précédentes, **caractérisée en ce que** lesdits moyens de pivotement (5, 14) sont des paliers à contact oblique.

5. Tête de tourbillonnage selon la revendication 1, **caractérisée en ce que** le moyen d'accouplement (17) et le moyen d'indexage (23) sont conformés de façon à pouvoir être reliés aux moyens correspondants de la broche (26) pour le tourbillonnage, et dégagés de ces derniers automatiquement, par l'action programmée d'un bras changeur d'outil associé audit centre d'usinage.

6. Utilisation de la tête de tourbillonnage selon l'une des revendications 1 à 5, sur la broche (26) d'un centre d'usinage à cinq axes pour l'usinage à la barre, en un cycle, de vis de longueur nécessitant une opération de tourbillonnage à contre-pointe (29) et un fraisage de la tête de la vis, le fraisage de la tête de la vis étant réalisé par la broche équipée pour cette opération d'une fraise usuelle et déplacée selon un programme conventionnel.

7. Utilisation selon la revendication 6 pour l'usinage d'une vis à os à tête fraisée.
